# EUROPÄISCHE PATENTSCHRIFT

(11) **EP 2 526 266 B1**
(45) Veröffentlichungstag und Bekanntmachung des Hinweises auf die Patenterteilung: **21.10.2020**
(21) Anmeldenummer: 10798067.4
(22) Anmeldetag: 17.12.2010
(51) Int. Cl.: F01L 3/20, F16K 15/03, F16K 15/16, F16K 27/02, F02M 26/59, F02M 26/11

(54) **RÜCKSCHLAGVENTIL FÜR EINE VERBRENNUNGSKRAFTMASCHINE UND VERFAHREN ZUR HERSTELLUNG EINES DERARTIGEN RÜCKSCHLAGVENTILS**
NON-RETURN VALVE FOR AN INTERNAL COMBUSTION ENGINE AND METHOD FOR PRODUCING SUCH A NON-RETURN VALVE
CLAPET ANTIRETOUR POUR UN MOTEUR À COMBUSTION INTERNE ET PROCÉDÉ POUR FABRIQUER UN TEL CLAPET ANTIRETOUR

(30) Priorität: 19.01.2010 DE 102010005116
(43) Veröffentlichungstag der Anmeldung: 28.11.2012
(73) Patentinhaber: Pierburg GmbH, 41460 Neuss (DE)
(72) Erfinder: HÜSGES, Hans-Jürgen, 47877 Willich (DE); KÜHNEL, Hans-Ulrich, 41239 Mönchengladbach (DE)
(74) Vertreter: terpatent Patentanwälte ter Smitten Eberlein-Van Hoof Rütten Daubert
(86) Internationale Anmeldenummer: PCT/EP2010/070049
(87) Internationale Veröffentlichungsnummer: WO 2011/088936

(56) Entgegenhaltungen:
- EP-A1- 1 234 956
- WO-A1-03/010455
- WO-A1-2008/091672
- DE-A1- 3 807 200
- DE-A1- 19 953 198
- DE-B3-102005 059 120
- JP-A- 10 332 008
- JP-A- 53 005 430
- JP-U- 60 051 368
- US-A- 5 253 617
- US-A1- 2003 209 275

## Beschreibung

Die Erfindung betrifft ein Rückschlagventil für eine Verbrennungskraftmaschine mit einem Gehäuse, welches zumindest einen Durchströmungsquerschnitt aufweist, zumindest einer Ventilsitzfläche, die den Durchströmungsquerschnitt umgibt, zumindest einem Ventilschließglied, über welches der Durchströmungsquerschnitt druckabhängig verschlossen oder freigegeben ist und welches als Blattfederelement ausgebildet ist und zumindest einem Ventilanschlagelement, über welches eine Öffnungsbewegung des Ventilschließgliedes begrenzt ist.

Rückschlagventile werden insbesondere in Abgasrückführleitungen eingesetzt, um zu verhindern, dass Luft aus der Ladeluftleitung in die Abgasrückführleitung strömt, wenn der Druck in der Ladeluftleitung aufgrund der Druckschwankungen im Abgasbereich höher ist als der Druck in der Abgasrückführleitung, Diese Ventile sollen möglichst schnell öffnen und schließen, so dass sie zumeist als Flatterventile mit Blattfederelementen als Ventilschließglieder ausgeführt werden. Da der Öffnungsquerschnitt solcher Flatterventile begrenzt ist und öffnungsbegrenzer in Form von Anschlagelementen vorzusehen sind, um ein Brechen der Blattfedern zu verhindern, werden diese Ventile zumeist mehrflutig ausgebildet.

So ist aus der DE 199 53 198 A1 ein derartiges vierflutig ausgeführtes Rückschlagventil bekannt, bei dem vier Blattfederelemente jeweils einzeln gemeinsam mit einem Anschlagelement durch Schrauben an einem separat hergestellten Grundgehäuse, welches zweiteilig ausgeführt ist und zunächst zusammengesetzt werden muss, befestigt werden. Die Blattfederelemente sind dabei entweder paarweise einander gegenüberliegend oder an den Seitenflächen eines Pyramidenstumpfes angeordnet. Entsprechend ist der Herstell- und Montageaufwand recht hoch.

Auch aus der DE 10 2009 007 609 A1 ist ein mehrflutiges Rückschlagventil bekannt, wobei die Anschlagelemente und die Ventilschließglieder einstückig ausgebildet sind und in entsprechende Aufnahmen des Gehäuses eingesteckt beziehungsweise eingeschoben werden. Die Durchströmungsquerschnitte sind jeweils paarweise gegenüberliegend angeordnet. Der Montageaufwand wird bei dieser Ausführung zwar reduziert, jedoch ist weiterhin ein Zusammenbau des Gehäuses und der Ventilschließglieder mit den Anschlagelementen erforderlich. Problematisch ist hierbei auch die Haltbarkeit der lediglich formschlüssigen Befestigung. Des Weiteren ist die Lagegenauigkeit des Ventilschließgliedes zum Ventilsitz mit relativ großen Toleranzen behaftet, so dass ein vollständiges Schließen oft nicht erreicht wird.

In der DE 10 2005 059 120 B3 wird schließlich eine dreiteilige zusammengesetzte Rückschlagventileinrichtung offenbart, bei der eines der Teile das Gehäuse bildet, ein zweites Teil alle Anschlagelemente bildet und ein drittes Teil alle Ventilschließglieder bildet. Diese Teile werden ineinander gesetzt und verklemmt. Eine Befestigung der Teile aneinander liegt jedoch nicht vor, so dass Positionsungenauigkeiten aufgrund der Lagetoleranzen zwischen den Teilen entstehen. Dies kann zu Undichtigkeiten zwischen Ventilsitz und Blattfederelement führen.

Die US 5,253,617 offenbart eine Rückschlagventilvorrichtung, die mehrere nebeneinander angeordnete Ventile aufweist, deren Rückwand jeweils als Anschlag für das flexible Ventilelement des benachbarten Ventils dient. Die Befestigung der Ventilelemente am Gehäuse erfolgt, indem die Ventilelemente an das Gehäuse angelegt und umspritzt werden.

Aus der JP 13002008 und der DE 38 07 200 A1 sind jeweils Rückschlagventile bekannt, deren zungenförmigen Ventilelemente zwischen zwei Körpern befestigt werden, indem diese unter Zwischenlage des Ventilelementes miteinander verbunden werden.

Daher liegt der Erfindung die Aufgabe zugrunde, ein Rückschlagventil zu schaffen, welches bei möglichst geringem Montage- und Herstellungsaufwand sowie geringer Bauteileanzahl eine hohe Dichtigkeit aufweist. Zusätzlich soll ein Verfahren zur Herstellung eines derartigen Ventils geschaffen werden, mit dem eine möglichst toleranzfreie und feste Positionierung der Blattfederelemente zu den Ventilsitzflächen möglich wird.

Diese Aufgaben werden durch ein Rückschlagventil mit den Merkmalen des kennzeichnenden Teils des Anspruchs 1 sowie ein Verfahren mit den Merkmalen des kennzeichnenden Teils des Anspruchs 11 gelöst.

Dadurch, dass das Gehäuse ein Kunststoffspritzgussteil ist und das Blattfederelement an einem Ende derart von dem das Gehäuse mit dem Durchströmungsquerschnitt bildenden Kunststoff beim Spritzen des Gehäuses umspritzt wird, dass dieses umspritzte Ende des Blattfederelementes durch den Kunststoff am Gehäuse befestigt ist, wird eine zuverlässige Befestigung ohne zusätzliche Bauteile erreicht. Eine weitere Montage ist nicht erforderlich.

Eine besonders gute Dichtigkeit des Ventils wird durch ein Verfahren erreicht, bei dem Blattfederelemente ausgestanzt werden, die Blattfederelemente in eine Werkzeugform, welche die Form des Gehäuses abbildet, eingelegt werden und das Gehäuse in der Werkzeugform spritzgegossen wird, wobei zu einer Grundfläche weisende Enden der Blattfederelemente umspritzt werden. Die Ventilsitzfläche entspricht somit in ihrer Form exakt der Verschlussseite des korrespondierenden Blattfederelementes, so dass Lagetoleranzen beinahe vollständig ausgeschlossen werden. Gleichzeitig ist keine weitere Montage zur Herstellung des Ventils notwendig.

In einer erfindungsgemäßen Weiterbildung weist das umspritzte Ende des Blattfederelementes eine geringere Breite auf als der die Durchströmungsöffnung verschließende Bereich des Blattfederelementes. Somit kann die gesamte Breite des Rückschlagventils als Durchströmungsquerschnitt verwendet werden, und dennoch das Ende des Ventils vollständig mit Kunststoff umspritzt werden, wodurch die Haltbarkeit der Befestigung verbessert wird.

In einer besonders bevorzugten Ausführung weist das Gehäuse eine Grundfläche auf, in der zumindest ein Einströmquerschnitt ausgebildet ist, und von der aus sich Seitenwände mit den Durchströmungsquerschnitten, die von der Grundfläche aus schräg aufeinander zulaufen und geschlossene Seitenwände, die im Wesentlichen senkrecht zu den schräg angeordneten Seitenwänden angeordnet sind, erstrecken. Es ergibt sich eine prismenähnliche Form mit leicht schräg gestellten Dreiecksseiten. Es ergibt sich ein einfacher Einbau in eine Abgasleitung bei guten Durchströmungsverhältnissen im Ventil. Mehrere dieser Prismenformen können hintereinander angeordnet werden,

In einer weiterführenden Ausführung sind die Seitenwände im von der Grundfläche entfernten Bereich über eine Begrenzungswand miteinander verbunden. Diese Form ist leicht herstellbar und ermöglicht die Ausgestaltung weiterer Teile an der Begrenzungswand des Ventils.

In einer besonders bevorzugten konstruktiven Ausgestaltung der Erfindung weist das Gehäuse vier Durchströmungsquerschnitte auf, die paarweise gegenüberliegend zueinander angeordnet sind, wobei zwei Einströmquerschnitte sowie jeweils zwei Seitenwände hintereinander angeordnet sind. Es ergibt sich entsprechend ein vierflutiges System, welches eine Trennung der verschiedenen Abgasfluten bei entsprechender Ausgestaltung des Gehäuses ermöglicht.

Vorzugsweise sind die Ventilanschlagelemente einstückig mit dem Gehäuse ausgebildet, so dass eine weiterführende Montage entfällt.

In einer hierzu weiterführenden Ausführungsform erstrecken sich die Ventilanschlagelemente von der oberen Begrenzungswand aus zunächst im Wesentlichen parallel zur Grundfläche und erstrecken sich im weiteren Verlauf an ihrem von der Begrenzungswand abgewandten Ende in Richtung zur Grundfläche oder parallel zur Ventilsitzfläche über das zum umspritzten Ende entgegengesetzten freien Ende der Blattfederelemente hinweg. Es ergibt sich hieraus ein beinahe toleranzfrei positionierter Anschlag für die Blattfederelemente. Auch hier entfallen weitere Montageschritte.

Vorzugsweise ist die Grundfläche von einem Dichtorgan umgeben, wodurch eine dichte Befestigung des Rückschlagventils an oder in der Abgasleitung ermöglicht wird.

Zur ausreichenden Haltbarkeit der Befestigung weisen die Blattfederelemente am umspritzten Ende Durchbrüche auf, durch welche der Kunststoff beim Umspritzen dringt, so dass ein Lösen insbesondere entlang der Ventilsitzfläche zuverlässig verhindert wird.

In einer hierzu alternativen erfindungsgemäßen Ausführung sind die Blattfederelemente am umspritzten Ende gebogen ausgeführt. Auch dies verhindert ein Lösen entlang der Ventilsitzfläche und erhöht die Haltbarkeit der Befestigung.

Somit werden in einer Weiterbildung des erfindungsgemäßen Verfahrens die Blattfederelemente vor dem Einlegen in die Werkzeugform an ihrem im Folgenden zu umspritzenden Ende gebogen oder es werden in die Blattfederelemente am zu umspritzenden Ende Durchbrüche gestanzt, die beim Umspritzen mit Kunststoff gefüllt werden.

Vorteilhafterweise wird der Umfang der Grundfläche mit einem elastischen Kunststoff umspritzt. So wird auf einfache Weise eine Dichtung im Umfangsbereich der Grundfläche erzeugt.

In einer weiterführenden Ausführung wird ein eine Durchströmungsöffnung verschließender Bereich der Blattfederelemente mechanisch oder pneumatisch vom Kunststoff gelöst. Reste des Kunststoffs, die sich in der Form um den nicht zu umschließenden Bereich des Blattfederelementes legen, können somit gelöst werden. Eine Fehlfunktion des Ventils wird vermieden.

Es wird somit ein Rückschlagventil geschaffen und ein Verfahren zur Herstellung eines solchen vorgestellt, bei denen die Herstellung im Vergleich zu bekannten Ausführungen vereinfacht wird und gleichzeitig eine sehr gute Dichtigkeit zwischen Ventilsitzfläche und Blattfederelement durch sehr geringe vorhandene Toleranzen erzielt wird. Dieses Ventil schließt und öffnet sehr schnell, wobei eine Überlastung der Blattfederelemente durch die Anschlagelemente zuverlässig vermieden wird.

Ein Ausführungsbeispiel der Erfindung ist in den Zeichnungen dargestellt und wird nachfolgend beschrieben.

Figur 1 zeigt eine Seitenansicht des erfindungsgemäßen Rückschlagventils in geschnittener Darstellung.

Figur 2 zeigt eine Seitenansicht des Rückschlagventils aus Figur 1.

Figur 3 zeigt eine Ansicht von der Grundfläche in das erfindungsgemäße Rückschlagventil aus Figur 1.

Das dargestellte erfindungsgemäße Rückschlagventil ist als vierflutiges Rückschlagventil mit vier Durchströmungsquerschnitten 2 ausgebildet, welche paarweise gegenüberliegend zueinander angeordnet sind.

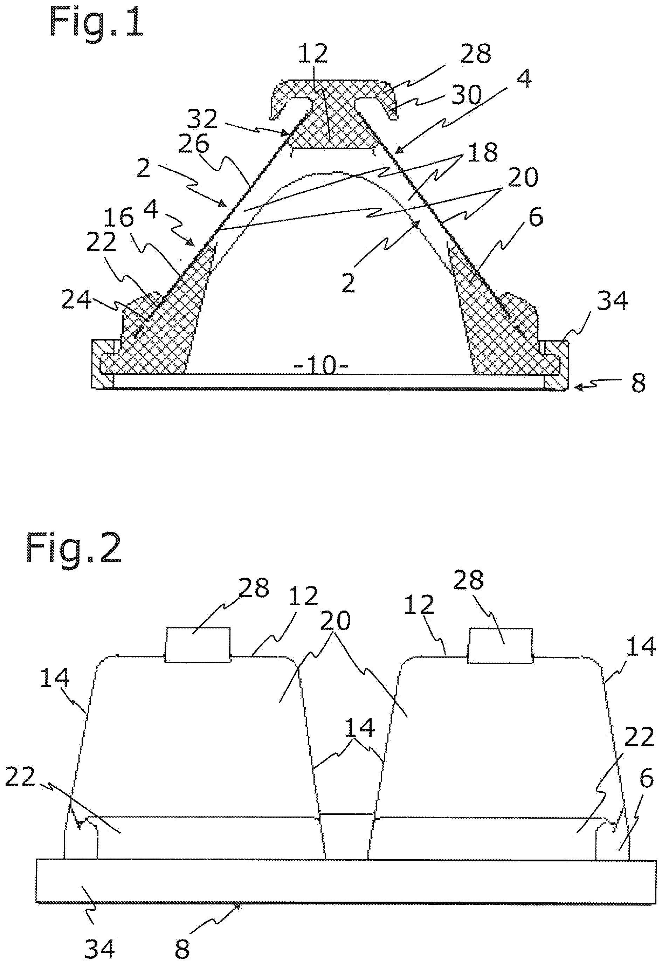

Die Durchströmungsquerschnitte 2 sind an Seitenwänden 4 eines Gehäuses 6 angeordnet, welches aus zwei hintereinander angeordneten prismenähnlichen Formen mit einer Grundfläche 8 besteht, die in zwei Einströmquerschnitte 10 unterteilt ist. Jede der beiden prismenähnlichen Formen besteht aus einer parallel zur Grundfläche 8 angeordneten Begrenzungswand 12 sowie den die Grundfläche 8 mit der Begrenzungswand 12 verbindenden Seitenwänden 4 mit den Durchströmungsquerschnitten 2 und im Wesentlichen senkrecht hierzu angeordneten geschlossenen Seitenwänden 14 bestehen. Die Seitenwände 4 sind schräg von der Grundfläche 8 aufeinander zulaufend ausgebildet und beschreiben im Querschnitt im Wesentlichen ein Dreieck mit flacher oberer Spitze, wie aus Figur 1 hervorgeht. Die Seitenwände 14 sind lediglich geringfügig aufeinander zulaufend ausgebildet und könnten auch weitgehend senkrecht zur Grundfläche 8 angeordnet werden.

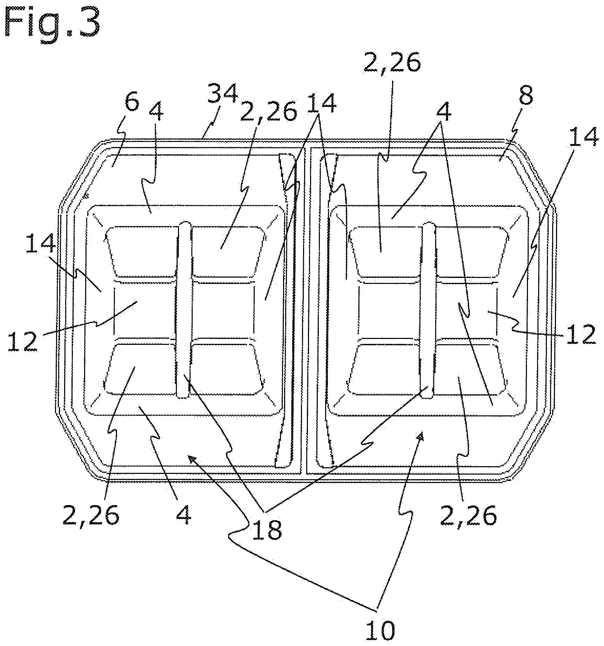

Die Durchströmungsquerschnitte 2 des Gehäuses 6 sind von Ventilsitzflächen 16 umgeben, wobei im vorliegenden Ausführungsbeispiel, wie in Figur 3 zu erkennen ist, jeder Durchströmungsquerschnitt 2 in zwei einzelne Durchströmungsquerschnitte aufgeteilt ist, so dass eine Mittelsprosse 18 die Durchströmungsquerschnitte 2 teilt, so dass eine zusätzliche Auflagefläche für Ventilschließglieder dient, welche im geschlossenen Zustand auf den Ventilsitzflächen 16 aufliegen und somit die Durchströmungsquerschnitte 2 beherrschen. Dies erhöht die Stabilität des Gehäuses 6 und verringert die mechanische Belastung der Ventilschließglieder.

Die Ventilschließglieder sind als Blattfederelemente 20 ausgeführt, welche aus einer Platine ausgestanzt werden. Die einzelnen Blattfederelemente 20 weisen im vorliegenden Ausführungsbeispiel an ihrem zur Grundfläche 8 weisenden und vom Kunststoff umspritzten Ende 22 Durchbrüche 24 auf, durch die der Kunststoff beim Umspritzen dringt, so dass ein Lösen der Blattfederelemente 20 vom Gehäuse 6 zuverlässig vermieden wird. Des Weiteren ist das umspritzte Ende 22 der Blattfederelemente 20 etwas schmaler ausgeführt als ein die Durchströmungsöffnung 2 verschließender Bereich 26 der Blattfederelemente 22, der auf dem Ventilsitz 16 im geschlossenen Zustand des Ventils aufliegt.

Am Gehäuse 6 sind des Weiteren vier Ventilanschlagelemente 28 ausgebildet, die sich von der oberen Begrenzungswand 12 zunächst parallel zur Grundfläche 8 über die Blattfederelemente 20 erstrecken. An ihrem von der Begrenzungswand 12 abgewandten Ende 30 erstrecken sie sich parallel und beabstandet von den Durchströmungsquerschnitten beziehungsweise den geschlossenen Blattfederelementen 20 über das zum umspritzten Ende 22 entgegengesetzten freien Ende 32 der Blattfederelemente 20, so dass diese in ihrer Öffnungsbewegung durch die Anschlagelemente 28 beschränkt werden. Die Ventilanschlagelemente 28 sind ebenso wie die Durchströmungsquerschnitte 2 paarweise gegenüberliegend angeordnet und einstückig mit dem Gehäuse 6 ausgeführt. Die gegenüberliegenden Anschlagelemente 28 können entsprechend auch als ein Anschlagelement betrachtet werden, welches sich symmetrisch zu beiden Seiten erstreckt.

Um eine gute Dichtwirkung des Rückschlagventils zwischen einer Abgasrückführleitung und dem Gehäuse 6 zu erreichen und des Weiteren das Gehäuse 6 dämpfend in der Abgasrückführleitung zu lagern, wird ein umlaufendes Dichtorgan 34 am Außenumfang der Grundfläche 8 befestigt. Dies erfolgt vorzugsweise durch Umspritzen mit einem elastomeren Kunststoff.

Die Herstellung des Rückschlagventils erfolgt derart, dass zunächst die Blattfederelemente 20 ausgestanzt werden. Hierbei werden gleichzeitig die Durchbrüche 24 mit ausgestanzt. Die Blattfederelemente werden daraufhin in eine Werkzeugform eingelegt, welche die Form des Gehäuses 6 darstellt. Anschließend wird das Gehäuse 6 durch Spritzgießen hergestellt. Zur Ausformung der Anschlagelemente werden hierbei Seitenschieber verwendet, Die zur Grundfläche 22 weisenden Enden 22, in denen die Durchbrüche 24 ausgebildet sind, werden dabei vom Kunststoff umgeben und die Durchbrüche mit Kunststoff gefüllt. Ein Lösen der Blattfederelemente 20 auch entlang der Ventilsitzfläche 16 wird hierdurch weitestgehend ausgeschlossen. Des Weiteren werden durch das direkte Umspritzen der Blattfederelemente 20 Ventilsitzflächen geschaffen, welche exakt der Form der Blattfederelemente entsprechen, so dass eine hervorragende Dichtigkeit im verschlossenen Zustand der Blattfederelemente 20 erzielt wird. Anschließend wird das Gehäuse aus der Form entnommen. Gegebenenfalls vorhandene Kunststoffreste im die Durchströmungsöffnungen 2 beherrschenden Bereich 26 werden durch mechanische oder pneumatische Öffnungsbewegungen der Blattfederelemente gelöst. Abschließend wird die Grundfläche 8 des Gehäuses 6 noch mit einem elastischen Kunststoff umspritzt, der als Dichtmittel dient.

Alternativ zur Herstellung der Durchbrüche beim Stanzen der Blattfederelemente 20 wäre es möglich das umspritzte Ende 22 zu biegen, wodurch ebenfalls der Halt des Blattfederelementes 20 am Gehäuse 6 verbessert würde.

Das Rückschlagventil wird so in eine Abgasleitung eingebaut, dass Abgas über den Einströmquerschnitt 10 in der Grundfläche 8 in das Ventil gelangt. Ist der Druck auf dieser Seite höher als der Druck im Außenbereich, also auf der Ladeluftseite des Ventils, werden die Blattfederelemente 20 von ihren Ventilsitzflächen 16 abgehoben, so dass ein Abgasstrom durch die Durchströmungsquerschnitte 2 in den Außenbereich des Ventiles strömen kann. Sobald der Druck jedoch im Außenbereich höher ist, werden die Blattfederelemente 20 auf ihre Ventilsitzflächen 16 gedrückt und ein Gasstrom vollständig unterbrochen. Die beschriebene Ausführung eines erfindungsgemäßen Rückschlagventils weist eine sehr gute Dichtigkeit der Rückschlagventile im geschlossenen Zustand auf, ohne zusätzliche Beschichtungen vornehmen zu müssen. Gleichzeitig ist dieses Rückschlagventil sehr kostengünstig herstellbar. Ein weiterer Montageaufwand entfällt vollständig.

Es sollte deutlich sein, dass innerhalb des Schutzbereiches des Hauptanspruchs verschiedene konstruktive Änderungen denkbar sind. So kann das Gehäuse verschiedene konstruktive Formen aufweisen. Diese müssen lediglich im Spritzguss entformbar sein. So können auch Ausnehmungen im Gehäuse zwischen der Ventilsitzfläche und dem umspritzten Bereich des Blattfederelementes vorgesehen werden, um die Ventilsitzfläche in diesem Bereich zu verringern. Auch können die Anschlagelemente einfach hakenförmig ausgeführt werden.

## Patentansprüche

1. Rückschlagventil für eine Verbrennungskraftmaschine mit einem Gehäuse, welches zumindest einen Durchströmungsquerschnitt aufweist,
zumindest einer Ventilsitzfläche, die den Durchströmungsquerschnitt umgibt,
zumindest einem Ventilschließglied, über welches der Durchströmungsquerschnitt druckabhängig verschlossen oder freigegeben ist und welches als Blattfederelement ausgebildet ist und zumindest einem Ventilanschlagelement, über welches eine Öffnungsbewegung des Ventilschließgliedes begrenzt ist,
**dadurch gekennzeichnet, dass**
das Gehäuse (6) ein Kunststoffspritzgussteil ist und das Blattfederelement (20) an einem Ende (22) derart von dem das Gehäuse mit dem Durchströmungsquerschnitt bildenden Kunststoff beim Spritzen des Gehäuses (6) umspritzt wird, dass dieses umspritzte Ende (22) des Blattfederelementes (20) durch den Kunststoff am Gehäuse befestigt ist.

2. Rückschlagventil für eine Verbrennungskraftmaschine nach Anspruch 1,
**dadurch gekennzeichnet, dass**
das umspritzte Ende (22) des Blattfederelementes (20) eine geringere Breite aufweist als der die Durchströmungsöffnung (2) verschließende Bereich (26) des Blattfederelementes (20).

3. Rückschlagventil für eine Verbrennungskraftmaschine nach einem der Ansprüche 1 oder 2,
**dadurch gekennzeichnet, dass**
das Gehäuse (6) eine Grundfläche (8) aufweist, in der zumindest ein Einströmquerschnitt (10) ausgebildet ist, und von der aus sich Seitenwände (4) mit den Durchströmungsquerschnitten (2), die von der Grundfläche (8) aus schräg aufeinander zulaufen und geschlossene Seitenwände (14), die im Wesentlichen senkrecht zu den schräg angeordneten Seitenwänden (4) angeordnet sind, erstrecken.

4. Rückschlagventil für eine Verbrennungskraftmaschine nach Anspruch 3,
**dadurch gekennzeichnet, dass**
die Seitenwände (4, 14) im von der Grundfläche (8) entfernten Bereich über eine Begrenzungswand (12) miteinander verbunden sind.

5. Rückschlagventil für eine Verbrennungskraftmaschine nach einem der Ansprüche 3 oder 4,
**dadurch gekennzeichnet, dass**
das Gehäuse (6) vier Durchströmungsquerschnitte (2) aufweist, die paarweise gegenüberliegend zueinander angeordnet sind, wobei zwei Einströmquerschnitte (10) sowie jeweils zwei Seitenwände (4) hintereinander angeordnet sind.

6. Rückschlagventil für eine Verbrennungskraftmaschine nach einem der vorhergehenden Ansprüche,
**dadurch gekennzeichnet, dass**
die Ventilanschlagelemente (28) einstückig mit dem Gehäuse (6) ausgebildet sind.

7. Rückschlagventil für eine Verbrennungskraftmaschine nach Anspruch 4,
**dadurch gekennzeichnet, dass**
sich die Ventilanschlagelemente (28) von der Begrenzungswand (12) aus zunächst im Wesentlichen parallel zur Grundfläche (8) erstrecken und sich im weiteren Verlauf an ihrem von der Begrenzungswand (12) abgewandten Ende (30) in Richtung zur Grundfläche (8) oder parallel zur Ventilsitzfläche (16) über das umspritzte Ende (22) entgegengesetzten freien Ende (32) der Blattfederelemente (20) hinweg erstrecken.

8. Rückschlagventil für eine Verbrennungskraftmaschine nach einem der Ansprüche 3 bis 7,
**dadurch gekennzeichnet, dass**
die Grundfläche (8) von einem Dichtorgan (34) umgeben ist.

9. Rückschlagventil für eine Verbrennungskraftmaschine nach einem der vorhergehenden Ansprüche,
**dadurch gekennzeichnet, dass**
die Blattfederelemente (20) am umspritzten Ende (22) Durchbrüche (24) aufweisen.

10. Rückschlagventil für eine Verbrennungskraftmaschine nach einem der Ansprüche 1 bis 8,
**dadurch gekennzeichnet, dass**
die Blattfederelemente (20) am umspritzten Ende (22) gebogen ausgeführt sind.

11. Verfahren zur Herstellung eines Rückschlagventils für Verbrennungskraftmaschinen nach einem der vorhergehenden Ansprüche,
**dadurch gekennzeichnet, dass**
Blattfederelemente (20) ausgestanzt werden, die Blattfederelemente (20) in eine Werkzeugform, welche die Form des Gehäuses (6) abbildet, eingelegt werden und das Gehäuse (6) in der Werkzeugform spritzgegossen wird, wobei zu einer Grundfläche (8) weisende Enden (22) der Blattfederelemente (20) umspritzt werden.

12. Verfahren zur Herstellung eines Rückschlagventils für Verbrennungskraftmaschinen nach Anspruch 11,
**dadurch gekennzeichnet, dass**
die Blattfederelemente (20) vor dem Einlegen in die Werkzeugform an ihrem im Folgenden zu umspritzenden Ende (22) gebogen werden.

13. Verfahren zur Herstellung eines Rückschlagventils für Verbrennungskraftmaschinen nach einem der Ansprüche 11 oder 12,
**dadurch gekennzeichnet, dass**
in die Blattfederelemente (20) am zu umspritzenden Ende (22) Durchbrüche (24) gestanzt werden, die beim Umspritzen mit Kunststoff gefüllt werden.

14. Verfahren zur Herstellung eines Rückschlagventils für Verbrennungskraftmaschinen nach einem der Ansprüche 11 bis 13,
**dadurch gekennzeichnet, dass**
der Umfang der Grundfläche (8) mit einem elastischen Kunststoff umspritzt wird.

15. Verfahren zur Herstellung eines Rückschlagventils für Verbrennungskraftmaschinen nach einem der Ansprüche 11 bis 14,
**dadurch gekennzeichnet, dass**
ein eine Durchströmungsöffnung verschließender Bereich (26) der Blattfederelemente (20) mechanisch oder pneumatisch vom Kunststoff gelöst wird.

## Claims

1. Check valve for an internal combustion engine comprising
a housing having at least one flow cross-section,
at least one valve seat surface that surrounds the flow cross-section,
at least one valve closing element, by which the flow cross-section is closed or opened as a function of pressure and which is designed as a leaf spring element, and at least one valve stop element by which an opening movement of the valve closing element is limited,
**characterized in that**
the housing (6) is a plastic injection molded part and that, during injection molding, the leaf spring element (20) is overmolded at one end (22) with the plastic material forming the housing having the flow cross-section such that this overmolded end (22) of the leaf spring element (20) is fastened to the housing by the plastic material.

2. Check valve for an internal combustion engine according to claim 1, **characterized in that** the overmolded end (22) of the leaf spring element (20) has a smaller width than the region (26) of the leaf spring element (20) that closes the flow opening (2).

3. Check valve for an internal combustion engine according to one of claims 1 or 2, **characterized in that** the housing (6) has a base area (8) in which at least one inflow cross-section (10) is formed, and from which side walls (4) with the through-flow cross-sections (2) which converge obliquely from the base area (8), and closed side walls (14) extend which are arranged substantially perpendicular to the obliquely arranged side walls (4).

4. Check valve for an internal combustion engine according to claim 3, **characterized in that** the side walls (4, 14) are connected to each other by a boundary wall (12) in the area remote from the base area (8).

5. Check valve for an internal combustion engine according to one of claims 3 or 4, **characterized in that** the housing (6) comprises four flow cross-sections (2) which are arranged in pairs opposite one another, with two inflow cross-sections (10) and two side walls (4) being arranged one behind the other.

6. Check valve for an internal combustion engine according to one of the preceding claims, **characterized in that** the valve stop elements (28) are formed integrally with the housing (6).

7. Check valve for an internal combustion engine according to claim 4, **characterized in that** the valve stop elements (28) first extend from the boundary wall (12) substantially parallel to the base area (8) and, in the further course, extend at their end (30) averted from the boundary wall (12) in the direction of the base area (8) or parallel to the valve seat surface (16) beyond the free end (32) of the leaf spring elements (20) opposite the overmolded end (22).

8. Check valve for an internal combustion engine according to one of claims 3 to 7, **characterized in that** the base area (8) is surrounded by a sealing element (34).

9. Check valve for an internal combustion engine according to one of the preceding claims, **characterized in that** the leaf spring elements (20) have apertures (24) at the overmolded end (22).

10. Check valve for an internal combustion engine according to one of claims 1 to 8, **characterized in that** the leaf spring elements (20) are bent at the overmolded end (22).

11. Method for producing a check valve for internal combustion engines according to one of the preceding claims, **characterized in that** leaf spring elements (20) are punched, the leaf spring elements (20) are inserted into a tool mold which reproduces the shape of the housing (6) and the housing (6) is injection molded in the mold, with ends (22) directed towards a base area (8) of the leaf spring elements (20) being overmolded.

12. Method for producing a check valve for internal combustion engines according to claim 11, **characterized in that** before being inserted into the mold, the leaf spring elements (20) are bent at their end (22) to be encapsulated later on.

13. Method for producing a check valve for internal combustion engines according to one of claims 11 or 12, **characterized in that** apertures (24) are punched into the leaf spring elements (20) at the end (22) to be overmolded, which apertures are filled with plastic during overmolding.

14. Method for producing a check valve for internal combustion engines according to one of claims 11 to 13, **characterized in that** the circumference of the base area (8) is coated with an elastic plastic.

15. Method for producing a check valve for internal combustion engines according to one of Claims 11 to 14, **characterized in that** an region (26) of the leaf spring elements (20) that closes a flow opening is mechanically or pneumatically detached from the plastic material.

## Revendications

1. Clapet anti-retour pour un moteur à combustion interne comprenant
un carter ayant au moins une section transversale d'écoulement,
au moins une surface de siège de clapet qui entoure la section transversale d'écoulement,
au moins un élément de fermeture de clapet, par lequel la section transversale d'écoulement est fermée ou libérée en fonction de la pression et qui est conçu comme un élément de ressort à lames et au moins un élément d'arrêt de clapet moyennant lequel un mouvement d'ouverture de l'élément de fermeture de clapet est limité,
**caractérisé en ce que**
le carter (6) est une pièce moulée par injection plastique et l'élément de ressort à lames (20) est, lors de l'injection du carter (6), entouré du plastique, qui forme le carter avec la section transversale d'écoulement, à une extrémité (22) de telle sorte que cette extrémité (22) surmoulée de l'élément de ressort à lames (20) est fixée au carter par le plastique.

2. Clapet anti-retour pour un moteur à combustion interne selon la revendication 1, **caractérisé en ce que** l'extrémité surmoulée (22) de l'élément de ressort à lames (20) présente une largeur inférieure à la région (26) de l'élément de ressort à lames (20) qui ferme l'ouverture d'écoulement (2).

3. Clapet anti-retour pour moteur à combustion interne selon l'une des revendications 1 ou 2, **caractérisé en ce que** le carter (6) présente une surface de base (8) dans laquelle au moins une section transversale d'entrée (10) est formée, et à partir de laquelle s'étendent des parois latérales (4) avec les sections transversales d'écoulement (2), qui convergent obliquement de partir de la surface de base (8), et des parois latérales fermées (14) qui sont disposées essentiellement perpendiculairement aux parois (4) latérales disposées obliquement.

4. Clapet anti-retour pour un moteur à combustion interne selon la revendication 3, **caractérisé en ce que** les parois latérales (4, 14) sont reliées entre elles via une paroi de délimitation (12) dans la zone éloignée de la surface de base (8).

5. Clapet anti-retour pour un moteur à combustion interne selon l'une des revendications 3 ou 4, **caractérisé en ce que** le carter (6) présente quatre sections transversales d'écoulement (2) disposées par paires l'une vis-à-vis de l'autre, deux sections transversales d'entrée (10) et deux parois latérales (4) étant disposées l'une derrière l'autre.

6. Clapet anti-retour pour un moteur à combustion interne selon l'une quelconque des revendications précédentes, **caractérisé en ce que** les éléments d'arrêt de clapet (28) sont formés d'une seule pièce avec le carter (6).

7. Clapet anti-retour pour un moteur à combustion interne selon la revendication 6, **caractérisé en ce que** les éléments d'arrêt de clapet (28) s'étendent à partir de la paroi de délimitation (12) d'abord essentiellement parallèlement de la surface de base (8) et, dans le prolongement, ils s'étendent à leur extrémité (30) opposée de la paroi de délimitation (12) vers la surface de base (8) ou parallèle à la surface du siège de clapet (16) à l'extrémité libre (32) des éléments de ressort à lames (20) opposée, au-delà de l'extrémité (22) surmoulée.

8. Clapet anti-retour pour moteur à combustion interne selon l'une des revendications 3 à 7, **caractérisé en ce que** la surface de base (8) est entourée d'un élément d'étanchéité (34).

9. Clapet anti-retour pour un moteur à combustion interne selon l'une quelconque des revendications précédentes, **caractérisé en ce que** les éléments à ressort à lames (20) présentent des ouvertures (24) à l'extrémité surmoulée (22).

10. Clapet anti-retour pour moteur à combustion interne selon l'une des revendications 1 à 8, **caractérisé en ce que** les éléments à ressort à lames (20) sont pliés à l'extrémité surmoulée (22).

11. Procédé de fabrication d'un clapet anti-retour pour moteurs à combustion interne selon l'une quelconque des revendications précédentes, **caractérisé en ce que** les éléments de ressort à lame (20) sont poinçonnés, les éléments de ressort à lames (20) sont insérés dans un moule à outils qui reproduit la forme du carter (6), et le carter (6) est moulé par injection dans le moule, des extrémités (22) des éléments de ressort à lames (20) orientées vers une surface de base (8) étant surmoulées.

12. Procédé de fabrication d'un clapet anti-retour pour moteurs à combustion interne selon la revendication 11, **caractérisé en ce qu'**avant d'être insérés, dans le moule les éléments de ressort à lame (20) sont pliés à leur extrémité (22) pour être encapsulés dans la suite.

13. Procédé de fabrication d'un clapet anti-retour pour moteurs à combustion interne selon l'une des revendications 11 ou 12, **caractérisé en ce que** des ouvertures (24) sont poinçonnées dans les éléments de ressort à lames (20) à l'extrémité (22) à surmouler et sont remplies de plastique pendant le surmoulage.

14. Procédé de fabrication d'un clapet anti-retour pour moteurs à combustion interne selon l'une des revendications 11 à 13, **caractérisé en ce que** la circonférence de la surface de base (8) est surmoulée d'une matière plastique élastique.

15. Procédé de fabrication d'un clapet anti-retour pour moteurs à combustion interne selon l'une des revendications 11 à 14, **caractérisé en ce qu'**une région (26) des éléments de ressort à lames (20), qui ferme une ouverture d'écoulement, est détachée mécaniquement ou pneumatiquement du plastique.
